# FASCICULE DE BREVET EUROPEEN

(11) **EP 1 028 988 B1**
(45) Date de publication et mention de la délivrance du brevet: **07.04.2004**
(21) Numéro de dépôt: 98954514.0
(22) Date de dépôt: 04.11.1998
(51) Int. Cl.: C08G 18/79, C08G 18/02, C09D 175/04

(54) **Composition polyuréthane pour application simultanée ou successive**
Polyurethan-Zusammensetzung zum simultanen oder sukzessiven Anlegen
Polyurethane composition for simultaneous or successive apply

(30) Priorité: 04.11.1997 FR 9713857
(43) Date de publication de la demande: 23.08.2000
(73) Titulaire: RHODIA CHIMIE, 92408 Courbevoie Cédex (FR)
(72) Inventeur: REVELANT, Denis, F-69740 Genas (FR); CHARRIERE, Eugénie, F-69000 Lyon (FR); BERNARD, Jean-Marie, F-69440 Mornant (FR)
(74) Mandataire: Jacobson, Claude
(86) Numéro de dépôt international: PCT/FR1998/002358
(87) Numéro de publication internationale: WO 1999/023132

(56) Documents cités:
- EP-A- 0 458 333
- EP-A- 0 693 512
- US-A- 4 910 332

## Description

L'invention se rapporte à un procédé pour diminuer la viscosité de compositions résultant de la polymérisation d'isocyanates monomères ou de copolymérisation d'isocyanates monomères avec un autre composé polymérisable, présentant généralement une viscosité élevée à température ambiante et permettre la séparation du produit de polymérisation de viscosité élevée d'avec l'isocyanate monomère correspondant.

Lors de la préparation de composés oligomères ou polymères par polymérisation d'isocyanates monomères de départ, ou copolymérisation avec un composé autre qu'un isocyanate, notamment un polyol, on obtient un mélange résultant contenant l'oligomère ou (pré)polymère recherché et de façon majoritaire le(s) monomère(s) n'ayant pas réagi, qu'il convient de séparer des produits de plus grande masse molaire.

En particulier, lors de la cyclotrimérisation catalytique d'isocyanates monomères, notamment de diisocyanates monomères, le mélange résultant contient l'isocyanurate, le cas échéant polyisocyanate, résultant de la condensation d'au moins trois monomères de départ, ainsi que les monomères non transformés.

Or, un des verrous de la préparation industrielle des polyisocyanates (poly)isocyanurates, notamment ceux obtenus par cyclotrimérisation catalytique d'isocyanates cycloaliphatiques est jusqu'à ce jour la séparation du monomère non transformé d'avec les produits de condensation de masse plus importante.

En effet, un grand nombre des compositions, notamment de polyisocyanates, obtenues à l'issue d'une réaction de (cyclo)trimérisation catalytique comprennent des produits de polymérisation présentant aux températures de séparation habituellement mises en oeuvre une forte viscosité, voire sont solides à ces températures.

Ainsi, lors de la préparation de l'IPDT (isophorone diisocyanate trimère) qui est obtenu par cyclotrimérisation catalytique de l'isophorone diisocyanate (IPDI ou 1-isocyanato-3,3,5-triméthyl-5-isocyanato méthyl cyclohexane), on obtient un mélange de polyisocyanates, notamment à motifs isocyanurate qui, à l'état purifié (teneur en IPDI inférieure à 0,5 %) est un solide dont le point de fusion se situe vers 110-115°C et de plus un fluide non newtonien (la viscosité à T > 115°C dépend du coefficient de cisaillement). La séparation de l'IPDI du mélange brut de trimérisation dans les évaporateurs utilisés à cet effet, notamment les évaporateurs à film raclé impose de ce fait d'utiliser des niveaux de température plus élevées que dans le cas de la séparation des monomères de type polyméthylène diisocyanates d'avec le mélange brut de trimérisation obtenu par polyaddition de ceux-ci.

En particulier, dans la dernière étape d'évaporation des IPDI, il est nécessaire de travailler à plus de 200°C pour éliminer tout l'IPDI et rendre l'IPDT apte à être véhiculé.

A l'échelle industrielle, de telles conditions opératoires imposent des adaptations qui accroissent la durée et le coût du procédé : modification d'échangeurs, pompe de reprise sur l'IPDT avant formulation, traçage de lignes.

En outre, le transport de l'IPDT purifié reste délicat en raison de pertes de charge importantes, risques de bouchage, rinçage rendu difficile des lignes, pollutions croisées plus importantes.

Par ailleurs, il existe un besoin dans l'industrie des revêtements de disposer de compositions polyisocyanates de viscosité réduite réunissant un certain nombre de propriétés qui ne sont souvent obtenues qu'en mettant on oeuvre des isocyanates de nature différente.

Ainsi, EP 693 512 décrit une composition pour revêtements polyuréthane comprenant un composant polyisocyanate et un composant polyol, le composant polyisocyanate étant obtenu en mélangeant :
- (A₁) de 50 à 95 % en poids d'un polyisocyanate laque à base de 1,6-diisocyanatohexane ayant une viscosité à 23°C de 100 à 4000 mPa.s ; et
- (A₂) de 5 à 50 % en poids d'un polyisocyanate contenant des groupes isocyanurates, à base de diisocyanates cycloaliphatiques.

Le composant polyisocyanate peut être obtenu en ajoutant, lors de la préparation du composant A₂ le composé A₁ dans le mélange réactionnel brut de fin de réaction de trimérisation et en éliminant ensuite par distillation en couches minces les monomères cycloaliphatiques en excès. Le document US 4,910,332 divulgue un procédé de préparation de polyisocyanates contenant des groupements uréthanne. Le procédé met plus particulièrement en oeuvre (i) un composant diisocyanate contenant au moins un diisocayante aromatique et (ii) un polyol pour former une composition uréthanne. Les monomères diisocyanates n'ayant pas réagit et présents dans cette composition sont éliminés par distillation, celle-ci ayant lieu après ajout d'un polyisocyanate aliphatique contenant des groupements isocyanurates. Ces compositions sont utiles pour l'élaboration de revêtements de type uréthanne à propriétés améliorées. Aucune propriété n'est cependant démontrée, notamment relativement à la durée de séchage de ces revêtements.

Grâce à l'invention, on a découvert de manière surprenante qu'en ajoutant à une composition oligomère/polymère présentant une viscosité élevée, obtenue par polymérisation, notamment (cyclo)trimérisation catalytique, disocyanates cycloaliphatiques monomeres de départ, en particulier de diisocyanates, ou par co-polymérisation de ces composés avec un autre composé polymérisable, une quantité inférieure à 50 % en poids du mélange sans monomères d'un produit de viscosité sensiblement inférieure à celle de la composition oligomère/polymère de viscosité élevée, on pourrait réduire de manière substantielle la viscosité de la composition poly-/oligomère, de manière à permettre la séparation par distillation (évaporation) de l'oligomère ou polymère de forte viscosité de(s) (l')isocyanate(s) monomère(s) non transformé(s) et obtenir cet oligomère ou polymère avec une grande pureté comprenant moins de 1 %, de préférence moins de 0,5 % en poids de(s) (l')isocyanate(s) monomère(s) non transformé(s) correspondant(s).

En outre, les compositions finales contenant le mélange des oligomères/polymères de viscosité élevée et réduite dans les proportions indiquées présentent des propriétés d'application particulièrement intéressante pour l'obtention de revêtements, certaines de ses propriétés étant meilleures que celles obtenues avec un simple mélange des deux types de composants polyisocyanates dans les mêmes proportions.

Par forte viscosité ou viscosité élevée au sens de la présente invention, on entend une viscosité généralement supérieure à 10⁴ mPa.s à 25°C, incluant les composés solides à 25°C.

Par faible viscosité ou viscosité réduite au sens de la présente invention, on entend une viscosité généralement inférieure à 5.10³ mPa.s à 25°C. Les viscosités sont mesurées selon la norme DIN 53019.

Plus généralement, le rapport des viscosités du composé de viscosité faible au composé de viscosité élevée doit être inférieur à 1/1,5, de préférence inférieur à environ 1/2.

L'invention a ainsi pour objet un procédé pour séparer un(des) composé(s) oligomère(s) ou polymère(s) A obtenu(s) par polymérisation ou polycondensation d'isocyanates cycloaliphatiques monomères (A₁) entre eux ou polymérisation ou polycondensation d'isocyanates cycloaliphatiques monomères (A₁) avec un autre composé monomère co-polymérisable (A₂), d'avec le(s) monomère(s) non transformé(s), le(s)dit(s) composé(s) A présentant en présence d'une quantité de monomères (A₁ et éventuellement A₂) non supérieure à 1 % en poids, de préférence non supérieure à 0,5 % en poids après distillation, une viscosité (a), comprenant les étapes suivantes :
i) on abaisse la viscosité du mélange brut de polymérisation ou polycondensation contenant le(s)dit(s) composé(s) A en ajoutant à celui-ci un ou plusieurs composé(s) B, le composé (B) consistant en un composé oligomère ou polymère obtenu par polymérisation d'isocyanates monomères (B₁) ou copolymérisation d'isocyanates (B₁) avec un autre composé polymérisable (B₂)ₓ ayant une viscosité telle que b/a est inférieur à 1/1,5, et de préférence inférieur à 1/2, en une quantité inférieure à 50 % en poids du mélange A plus B ; et
ii) on co-distille le mélange ainsi obtenu de manière à séparer le(s) composé(s) (A) et (B) d'avec les monomères non transformés.

(A) et (B) sont de préférence miscibles à la température de distillation.

A₂ est de manière avantageuse un composé monomère polyfonctionnel à hydrogène mobile, en particulier un polyol.

B₂ est avantageusement un composé monomère à hydrogène mobile polyfonctionnel, en particulier un alcool mono ou polyfonctionnel.

(B) peut être notamment une molécule de point d'ébullition exprimé en degrès Kelvin, sous pression atmosphérique, sensiblement supérieur, avantageusement de 20 %, de préférence 30 % au moins au point d'ébullition le plus élevé de A₁ et A₂

(B) peut également être un additif pour vernis ou peintures, tel un agent "mar-résistance", un agent d'étalement ou un tensioactif permettant de favoriser la dispersion en milieux aqueux de A et B, ou un autre additif utilisé pour apporter une propriété quelconque a une composition pour la réalisation de revêtements.

Les composés A et B peuvent également consister en un mélange des composés décrits ci-dessus. En particulier, A et B peuvent comprendre un mélange de polyisocyanates obtenus par polymérisation de monomères identiques ou différents et, dans le cas où ils comprennent des co-polymères, ceux-ci peuvent être obtenus à partir de mélanges de monomères et co-monomères.

On préfère choisir A et B tels qu'ils ne réagissent pas entre eux à l'exception des réactions ayant lieu entre les fonctions isocyanates dont ils sont porteurs, dans les conditions du procédé.

Avantageusement, le poids moléculaire (Mw) du composé A n'est pas supérieur à 3 000, de préférence à 2 000, et plus préférentiellement à 1 500.

Avantageusement, le poids moléculaire (Mw) du composé B n'est pas supérieur à 10 000, de préférence à 5 000, et plus préférentiellement à 2 000.

Les fonctions isocyanates des composés (A) et (B) peuvent également être bloquées en tout ou partie par un groupe bloquant ou masquant. On choisira un tel groupe bloquant ou masquant de façon à ce qu'il ne soit pas libéré à la température de distillation du mélange (A)/(B).

Un groupe protecteur avantageux est un groupe polyoxyalkylène, notamment polyoxyéthylène.

Avantageusement, le composé (B) de faible viscosité appelé produit déviscosant est un polyisocyanate éventuellement à motif(s) isocyanurate obtenu par (cyclo)trimérisation catalytique d'isocyanates monomères ou d'un mélange d'isocyanate(s) monomères, comprenant éventuellement des groupes carbamate, biuret, uretdione et/ou allophanate. De préférence, (B) est le produit de (cyclo)trimérisation d'un isocyanate monomère aliphatique à chaîne alkylène linéaire ou ramifiée notamment de polyméthylène diisocyanate, ou d'un mélange d'isocyanates monomères aliphatiques à chaîne alkylène linéaire avec d'autres polyisocyanates monomères, plus particulièrement le polyisocyanate isocyanurate HDT (hexaméthylène diisocyanate trimère) obtenu par cyclotrimérisation catalytique d'hexaméthylène diisocyanate (HDI), la(les) fonction(s) isocyanate(s) pouvant être bloquée(s) de manière temporaire ou non.

On peut ajouter le composé (B) dans le mélange réactionnel comprenant (A) à l'état purifié (au moins 99 % en poids d'oligomères ou polymères) ou à l'état brut avec les monomères B₁ et, le cas échéant, B₂.

Toutefois, on préfère ajouter le mélange contenant des monomères que si les conditions de distillation de monomères B₁/B₂ d'avec A₁/A₂ sont faciles ou lorsque le pourcentage des monomères en sortie de distillation est identique ou peu différent de celui introduit pour la réaction de polymérisation, avantageusement (cyclo)trimérisation.

De manière générale, on préfère utiliser un composé (B) répondant aux formules générales suivantes : 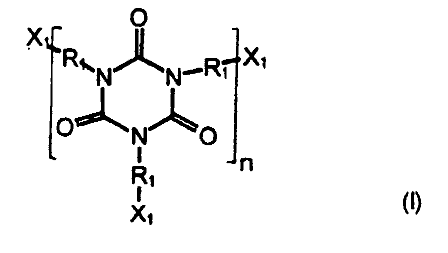 et/ou 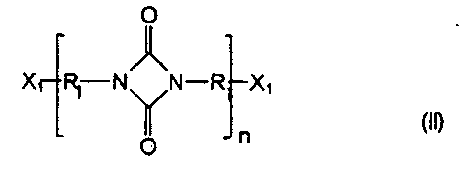 et/ou 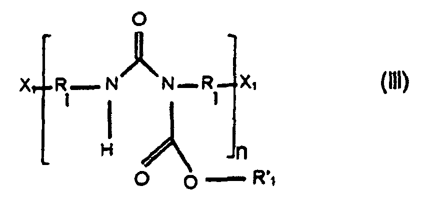 dans lesquelles R₁ identiques ou différents représentent H ou une chaîne hydrocarbonée aliphatique, de préférence une chaîne alkylène linéaire en C₃-C₂₀ et X₁ est choisi parmi :
- H
- NCO ; 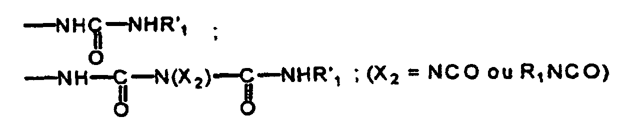 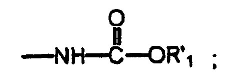 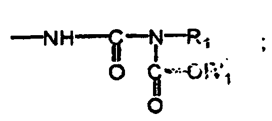 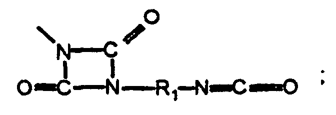
R₁ étant tel que défini ci-dessus, et R'₁ est le reste hydroxycarboné aliphatique ou cycloaliphatique d'un polymère, notamment d'un polyol, avantageusement en C₃-C₅₀, de préférence en C₃-C₃₀, éventuellement interrompu par un ou plusieurs atome(s) d'oxygène et/ou de soufre et comprenant éventuellement des motifs aromatiques et hétérocycliques dans la chaîne et éventuellement un ou plusieurs substituants notamment des groupes arylène, alkyle, ou des groupes fluorés ou silylés, etc ;
n est un nombre compris entre 1 et 7.

De manière générale, on préfère que (B) représente un polyisocyanate trimère vrai. Par "trimère vrai", on entend un oligomère comprenant un cycle isocyanurate et un seul, et constituant le produit de cyclocondensation théorique de trois moles de monomères isocyanates, de préférence diisocyanates, les triisocyanates pouvant également convenir, à l'exception des composés provenant de la condensation de plus de quatre monomères et/ou comportant des groupes allophanates, ainsi que les oligomères à motifs isocyanurates obtenus par oligomérisation d'un polyisocyanate à motif isocyanurate.

On préfère généralement que les monomères B₁ à partir desquels on obtient B soient des isocyanates, de préférence des diisocyanates ou des triisocyanates dans lesquels au moins un, de préférence deux, et le cas échéant, trois des atomes de carbone porteurs des fonctions isocyanates ne soient pas des atomes de carbone secondaires, tertiaires ou néopentyliques.

Les meilleurs résultats sont obtenus pour les monomères dans lesquels le squelette hydrocarboné est constitué par un enchaînement polyméthylène -(CH₂)ₙ-, n étant avantageusement compris entre 2 et 10.

On peut notamment utiliser comme composé (B) les composés oligomères et/ou polymères décrits dans EP 524 500 et ceux décrits dans FR 2 613 363.

Un composé B préféré est l'HDT répondant à la formule 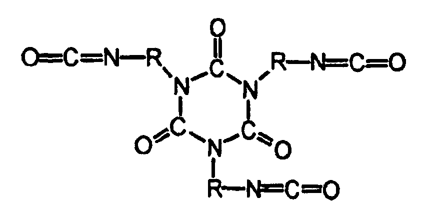 dans laquelle R est -(CH₂)₆-.

L'HDT est un produit connu, obtenu par cyclotrimérisation catalytique d'hexaméthylène diisocyanate (HDI), fluide à température ambiante, présentant une viscosité de l'ordre de 2,5 Pa.s à 25°C.

En outre, l'HDT est utilisé dans les formulations de peinture en association avec l'IPDT à des teneurs d'IPDT généralement inférieures à 50 %, en poids.

Son addition au cours des phases de distillation de ce fait ne crée pas d'inconvénient, dans la mesure où sa présence dans le produit final non seulement n'est généralement pas gênante, mais peut même être souhaitable.

En effet, comme indiqué précédemment, on a déterminé que les mélanges polyisocyanates (poly)isocyanurates obtenus à l'issue du procédé de co-distillation de l'invention permettaient par polycondensation avec des polyols d'obtenir des revêtements polyuréthanes présentant des propriétés de résistance et de rapidité de séchage des films remarquables et inattendues.

Les mélanges NBDT (norbornane diisocyanate trimère) /HDT et IPDT/HDT et H₁₂MDT/HDTou les mélanges d'autres diisocyanates trimères ou dimères, de viscosité élevée, notamment cycloaliphatiques avec des diisocyanates dimères ou trimères obtenus par mélange et par co-distillation des deux composés respectifs permet d'obtenir ultérieurement per polycondensation avec des polyols des films polyuréthanes présentant des propriétés équivalentes aux revêtements polyuréthanes obtenus avec des co-trimères préparés par cyclotrimérisation catalytique des mêmes diisocyanates monomères cycloaliphatiques avec de l'hexaméthylène diisocyanate.

Conviennent également au but de l'invention les composés lysine-triisocyanate qui sont très peu distillables mais représentent de bons agents déviscosants, y compris sous leur forme monomère. Ils peuvent également être utilisés sous la forme trimère partiellement condensée, c'est-à-dire sous la forme du mélange de cyclotrimérisation comprenant des trimères vrais (à cycle isocyanurate) en mélange avec les monomères et éventuellement les dimères (uretdione).

Grâce à l'invention, on peut séparer par distillation tout oligomère ou polymère de forte viscosité, obtenu par polymérisation ou polycondensation d'isocyanates monomères cycloaliphatiques ou mélange d'isocyanates monomères cycloaliphatiques, ou copolymérisation d'isocyanates monomères cycloaliphatiques avec un autre composé co-polymérisable, d'avec les monomères non transformés, aux températures compatibles avec un procédé industriel y compris les oligomères et polymères présentant une viscosité très élevée, supérieure à 50 Pa.s à 25°C, et les produits solides à température ambiante.

De manière générale, les meilleurs résultats sont obtenus :
- lorsque B ne comprend pas d'hydrogène susceptible de former une liaison hydrogène ; ou
- lorsque B comprend un atome d'hydrogène susceptible de former une liaison hydrogène intramoléculaire (allophanates).

Le composé (B) selon l'invention peut ainsi être utilisé notamment pour réduire la viscosité pendant les phases de distillation des polyisocyanates ou mélange de polyisocyanates de viscosité élevée suivants :
- les polyisocyanates (poly)isocyanurates, e.g. présentant au moins un cycle isocyanurate, obtenus par polycondensation de monomères aliphatiques, de-préférence à chaîne non ramifiée,
- les polyisocyanates (poly)isocyanurates comprenant des groupements carbamates et/ou allophanates,
- les polyisocyanates comprenant des groupes biurets, carbamates et/ou allophanates,
- les polyisocyanates comprenant des groupes uretdiones, et
- les prépolymères polyisocyanates polyuréthanes, obtenus par condensation d'isocyanates monomères, notamment de diisocyanates, avec un polyol à longue chaîne, notamment les prépolymères du type décrit dans US 5 115 071 obtenus par polymérisation de polyisocyanates polyfonctionnels comprenant les polyisocyanates aromatiques tels que le toluène diisocyanate, le tétraméthylxylène diisocyanate et le diphénylméthane diisocyanate ; les polyisocyanates cycloaliphatiques tels que le cyclohexane diisocyanate, l'isophorone diisocyanate, le norbomane diisocyanate ou 2,5(6)-diisocyanato-méthyl-bicyclo[2,2,1]heptane, NBDI), le 1,3-bis(isocyanatométhyl)cyclohexane (1,3-BIC), le dicyclohexylméthane diisocyanate ou diisocyanate de 4,4-dicyclohexylméthanediyle (H₁₂MDI) et le cyclohexyl 1,4-diisocyanate ; et les polyisocyanates aliphatiques linéaires tels que l'hexaméthylène diisocyanate, avec un polyol ayant de préférence une fonctionnalité supérieure à 2, plus particulièrement entre 2, 2 et 4 et un poids moyen équivalent en poids compris entre 62 et 10 000, avantageusement 62 et 5 000, de préférence 62 et 2 000. Des exemples représentatifs sont le triméthylolpropane, le glycérol, le pentaérythritol, le dipentaérylthritol, le trihydroxybutane, l'éthylèneglycol et les adducts partiellement alkoxylés de ceux-ci, ou les prépolymères polyisocayanates comprenant diverses fonctions urée, biuret, amide, ester...
   Ces composés (poly)isocyanates (A) répondent notamment aux formules suivantes : 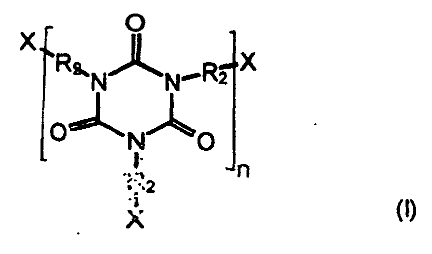 et/ou 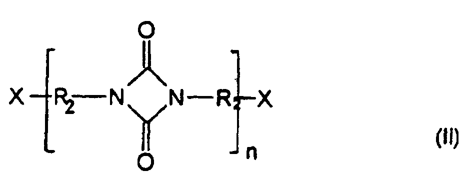 et/ou 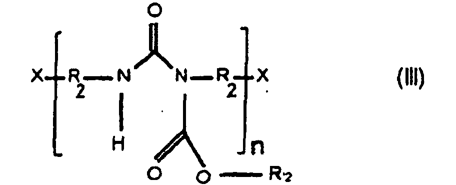
dans lesquelles les R₂ identiques ou différents sont choisis parmi une chaîne hydrocarbonée aliphatique, cycloaliphatique ou aromatique, comprenant de préférence de 2 à 50 atomes, de préférence de 2 à 20 atomes de carbone, les chaînes aliphatiques ou cycloaliphatiques étant éventuellement substituées par ou interrompues par un ou plusieurs groupes arylène, de préférence en C₄-C₈,

R'₂ est le reste hydrocarboné généralement d'un polymère, notamment d'un polyol, de préférence en C₃-C₅₀, éventuellement interrompu par un ou plusieurs atome(s) d'oxygène et/ou de soufre et comprenant éventuellement des motifs aromatiques et hétérocycliques dans la chaîne et un ou plusieurs substituants notamment des groupes arylène, alkyle, ou des groupes fluorés ou silylés,
n est un nombre entier compris entre 1 et 7,
et X est un groupe choisi parmi
- H
- NCO ; 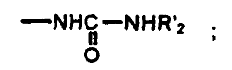 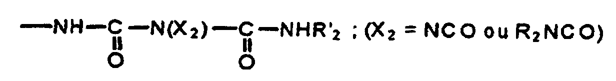 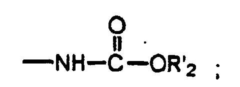 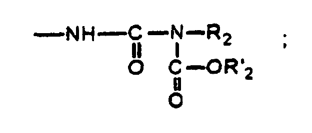 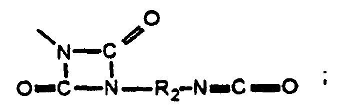
R₂ et R'₂ étant tels que définis ci-dessus.

Le composé (A) de viscosité élevée est avantageusement un polyisocyanate isocyanurate ou biuret obtenu par (cyclo)trimérisation catalytique de diisocyanates cycloaliphatiques, de préférence l'IPDT, le NBDT, l'H₁₂MDT, ou le 1,3-BDT (1,3-BIC trimère) ou de diisocyanates aliphatiques ramifiés par exemple le MPDT (2-méthylpentaméthylène diisocyanate trimère).

Le composé (B) est ajouté au mélange brut de polymérisation en un rapport pondéral composé (B)/composé (A) compris entre 5/95 et 49/51, de préférence entre 5/95 et 45/55.

Le composé (B) déviscosant peut être ajouté au mélange brut obtenu à l'issue de la réaction de polymérisation des isocyanates monomères de départ entre eux et/ou avec un autre composé, notamment un polyol tel que défini ci-dessus, directement dans le réacteur de polymérisation ou être ajouté au mélange brut résultant par mélange en ligne avant admission dans le train de distillation, pour être ensuite co-distillé avec l'oligomère ou polymère de forte viscosité que l'on souhaite séparer du (des) monomère(s) non transformé.

La température de co-distillation se situe avantageusement dans l'intervalle situé entre 120 et 250°C, de préférence 150°C et 210°C.

L'invention a également pour objet l'utilisation d'un(de) composé(s) oligomère(s) ou polymère(s) (B) de viscosité (b) obtenu par polymérisation d'isocyanates monomères ou copolymérisation d'isocyanates monomères avec un autre composé polymérisable, pour la séparation d'un composé oligomère ou polymère (A) de viscosité (a) obtenu par polymérisation d'isocyanates monomères ou copolymérisation d'isocyanates monomères avec un autre composé polymérisable, d'avec les isocyanates monomères correspondants, par co-distillation dudit(desdits) composé(s) (B) et (A), le rapport des viscosités b/a étant inférieur à 1/1,5 de préférence inférieur à 1/2 et la quantité pondérale de composé (B) par rapport au mélange (A) et (B) étant inférieure à 50 %.

L'invention a également pour objet une composition de polyisocyanates, présentant un ou plusieurs fonctions isocyanurates, comprenant :
- de 51 à 95 % en poids d'un premier polyisocyanate obtenu par (cyclo)trimérisation de monomères isocyanates, et éventuellement un autre monomère copolymérisable,
- de 5 à 49 % en poids d'un second polyisocyanate obtenu par (cyclo)trimérisation de monomères isocynates, et éventuellement un autre monomère copolymérisable,
dans laquelle le rapport des viscosités du second polyisocyanate au premier polyisocyanate est inférieur à 1/1,5, de préférence inférieur à 1/2, ladite composition étant obtenue par co-distillation dudit premier polyisocyanate et dudit second polyisocyanate et étant caractérises notamment par la présence dans la composition obtenue à l'issue de la distillation de traces de composés mixtes dudit premier polyisocyanate et dudit second polyisocyanate liés par pontage dimère.

Les monomères isocyanates sont avantageusement des diisocyanates ou des triisocyanates, les diisocyanates étant préférés.

Ces compositions permettent d'obtenir des films polyuréthanes présentant d'excellentes propriétés de résistance mécanique et aux intempéries en même temps que d'excellentes propriétés de séchage des films.

Les polyisocyanates obtenus par le procédé de l'invention sont avantageusement utilisés comme durcisseurs pour la préparation de revêtements, en particulier de peintures et vernis polyuréthannes par réaction des polyisocyanates avec un polyol.

De manière surprenante on a toutefois constaté que certains polyols apportaient des avantages appréciables lorsqu'ils étaient mis à réagir avec des polyisocyanates obtenus conformément à la présente invention.

Ces polyols sont de nature acrylique.

Le polyol de nature acrylique répond aux conditions suivantes pour un extrait sec (ES) compris entre 75-80%, en poids.
- Mw (poids moléculaire moyen en poids) non supérieur à 10000, avantageusement non supérieur à 5000, de préférence non supérieur à 2000.
   On préfère Mw inférieur à 10000 avantageusement inférieur à 5000, de préférence inférieur à 2000.
- Mn (poids moléculaire moyen en nombre) non supérieur à 5000, avantageusement non supérieur à 3000, de préférence non supérieur à 800.
   On préfère Mn inférieur à 5000, avantageusement inférieur à 3000, Je préférence inférieur à 800.
- Mw/Mn (rapport de dispersité) non supérieur à 5, avantageusement non supérieur à 3, de préférence non supérieur à 2.
   On préfère Mw/Mn inférieur à 5, avantageusement inférieur à 3 de préférence inférieur à 2.
- nombre d'OH/molécule supérieur ou égal à 2, avantageusement supérieur à 2.

Pour plus de détail, on peut se rapporter à la norme ASTM-E222.

Les Mn et Mw sont obtenus avantageusement par chromatographie d'exclusion perméation sur gel en prenant le styrène comme étalon.

On préfère des polyols obtenus par polymérisation d'hydroxyalkyl(meth)acrylates, notamment hydroxyéthyl(meth)-acrylate et hydroxypropyl (meth)acrylates.

Sont tout particulièrement préférées les résines commercialisées sous les dénominations JONCRYL SCX 922 (Johnson Polymers) et SYNOCURE 866 SD (Cray valley).

Pour obtenir une viscosité satisfaisante, il est également possible d'ajouter au polyol avant ou après mélange avec le polyisocyanate un solvant réactif.

Avantageusement on utilise une quantité de diluant réactif non supérieure à 30%, avantageusement non supérieure à 20 %, de préférence non supérieure à 10% en masse par rapport à la masse sèche du polyol.

Des avantages considérables en termes de propriétés du revêtement final sont déjà obtenus pour une quantité de solvant réactif inférieur à 10 % en poids. Ces propriétés notamment la vitesse de séchage, la dureté du revêtement et la résistance aux chocs sont encore excellentes lorsque la quantité de solvant réactif est abaissée y compris en l'absence de solvant réactif.

Un autre objet de l'invention est constitué par les compositions pour application simultanée ou successive comprenant:
- une composition polyisocyanate obtenue par le procédé de l'invention, et
- un polyol tel que défini ci-dessus.

Les compositions obtenues par le procédé de l'invention peuvent notamment être utilisées dans des formulations aqueuses de revêtement, en étant mises en suspension, en émulsion ou en dispersion, ou solubilisées par le greffage d'agents hydrophiles ou par addition de composés tensioactifs.

Les compositions de l'invention peuvent subir une réaction de masquage temporaire partielle ou totale des fonctions isocyanates avec un ou un mélange d'agents de masquage.

Les fonctions isocyanates peuvent ensuite être restaurées par application d'un processus physicochimique tel que l'augmentation de la température ou transformées ou polymérisées par application d'un processus physicochimique tel qu'un rayonnement ultra-violet.

Les compositions selon l'invention peuvent également se présenter sous forme de suspensions.

Elles peuvent comprendre outre les composants décrits ci-dessus :
- éventuellement un ou plusieurs composé(s), minéral(aux) ou organique(s) présentant une fonction de pigmentation, de charge, un agent matant, ou tout autre additif destiné à faciliter l'application du revêtement ou à améliorer les propriétés du revêtement, telle que par exemple un agent d'étalement, un agent "cicatrisant",
- éventuellement, un ou des catalyseurs,
- éventuellement un ou des agents de surface permettant une amélioration de la mise en oeuvre de la formulation tels que, par exemple, un agent doué de propriété tensioactive, un agent anti-mousse, un solvant, une solution aqueuse dont le pH est éventuellement ajusté.

Les exemples ci-après illustrent l'invention.

### EXEMPLE 1 :

### Séparation du trimère l'isophorone diisocyanate (IPDT) d'avec tes monomères isophoronediisocyanates (IPDI) non transformés.

L'HDT a été ajouté dans les proportions indiquées au tableau I ci-dessous à un brut de trimérisation d'IPDI contenant les proportions indiquées d'IPDT et de monomère non transformé.
Le mélange IPDI/IPDT/HDT a été introduit dans un évaporateur à film raclé.

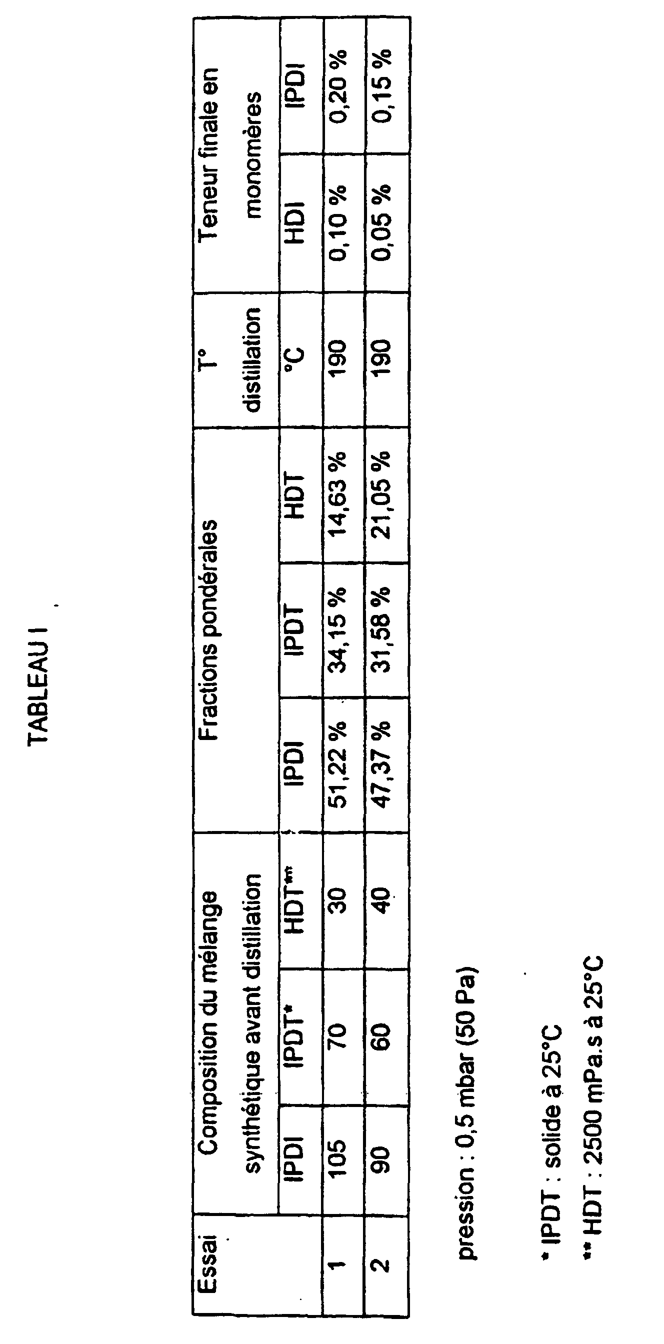

L'addition d'HDT rend possible la séparation de l'IPDT d'avec l'IPDI à une température de 190°C.

Pour les deux mélanges synthétiques testés, on obtient des teneurs finales en monomères compatibles avec la spécification retenue pour ce type de produit : Σ monomères < 0,5 % poids après ajout de 20 % de solvant de formulation.

### EXEMPLE 2 :

### Séparation du trimère de norbornyldiisocyanate (NBDT) d'avec le norbonyldiisocyanate monomère (NBDI).

L'HDT a été ajouté dans les proportions indiquées du tableau Il ci-dessous à un brut de trimérisation de NBDI contenant les proportions indiquées de NBDT trimère.

Le mélange NBDI/NBDT/HDT a été introduit dans un évaporateur à film raclé.

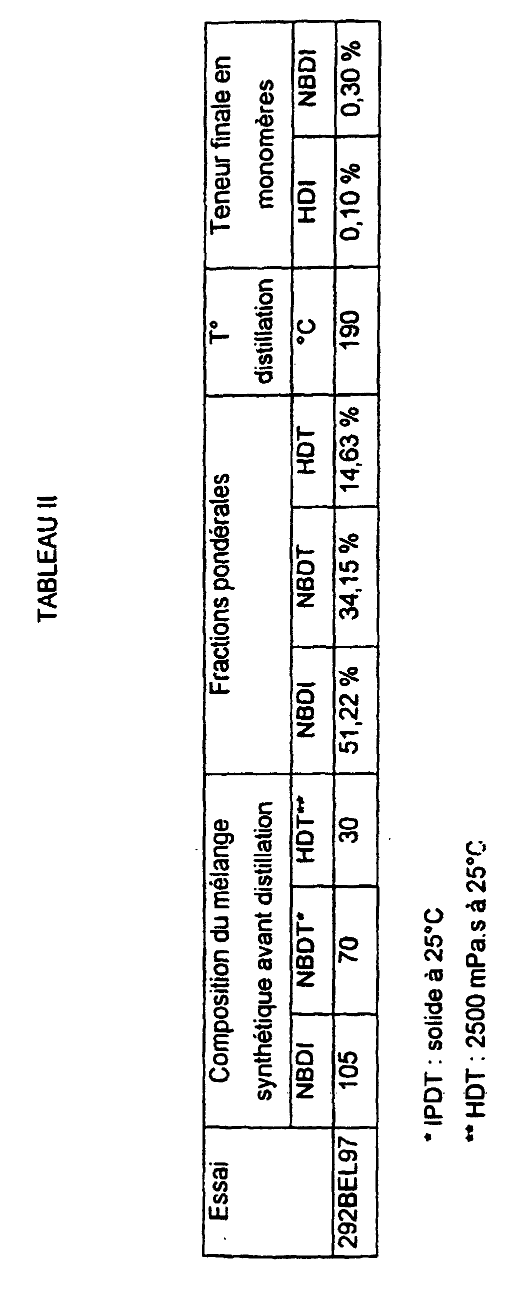

Dans ce cas, l'ajout d'HDT permet de séparer le monomère d'avec le trimère à une température de 190°C et également d'obtenir un mélange NBDT/HDT compatible avec la spécification retenue pour ce type de produit : teneur en monomères < 0,5 % poids.

La co-distillation des polyisocyanates polyloligomères avec l'HDT dans les conditions de l'invention peut conduire par pontage dimère à des espèces mixtes HDT-polyisocyanate poly/olygomère autre, qui se retrouvent dans le produit final.

### EXEMPLE 3 :

### Propriété de vernis, obtenus avec des mélanges NBDT/HDT et IPDT/HDT selon l'invention.

Des vernis ont été préparés à base d'un mélange de deux polyols acryliques en solution dans l'acétate de butyle : ®Joncryl 912/®Joncryl 922 (25/75) avec les différents durcisseurs suivants :
1. HDT seul (témoin),
2. cotrimère NBDI/HDI (66/34) (obtenu par copolymérisation de NBDI et d'HDI),
3. cotrimère NBDI/HDI (48/52) (obtenu par copolymérisation de NBDI et d'HDI),
4. mélange NBDT/HDT (70/30) (obtenu par co-distillation selon l'invention),
5. mélange IPDT/HDT (70/30) (obtenu par co-distillation selon l'invention),
6. mélange physique, IPDT/HDT (70/30)
7. IPDT/HDT (60/40) (obtenu par co-distillation selon l'invention),

Le rapport NCO/OH a été fixé à 1,05 et la viscosité de chaque vernis a été ajustée à environ 25 secondes à la coupe Ford n° 4.

Les paramètres suivants ont été évalués :
- teneur en matières organiques volatiles (VOC),
- vie en pot ("pot-life") (temps nécessaire au doublement de la viscosité initiale),
- le temps de séchage hors-poussière (test des billes de verre sur vernis appliqués sur des plaques de verre à la jauge 200 µm),
- la dureté Persoz après 1,3 et 7 jours de séchage à température ambiante et après 1 et 7 jours suivant un étuvage de 30 minutes à 60°C,
   - la résistance à la méthyléthylcétone (MEK) notée de 1 à_5 (1 = excellent et 5 = mauvais),
- (dépôt d'une goutte pendant 2 minutes sous verre de montre),
   - la résistance aux acides sur des films après plus de 21 jours de mûrissement à température ambiante notée de 1 à 5 (1 = bonne et 5 = très mauvaise).

Les résultats sont rapportés au tableau III ci-dessous :

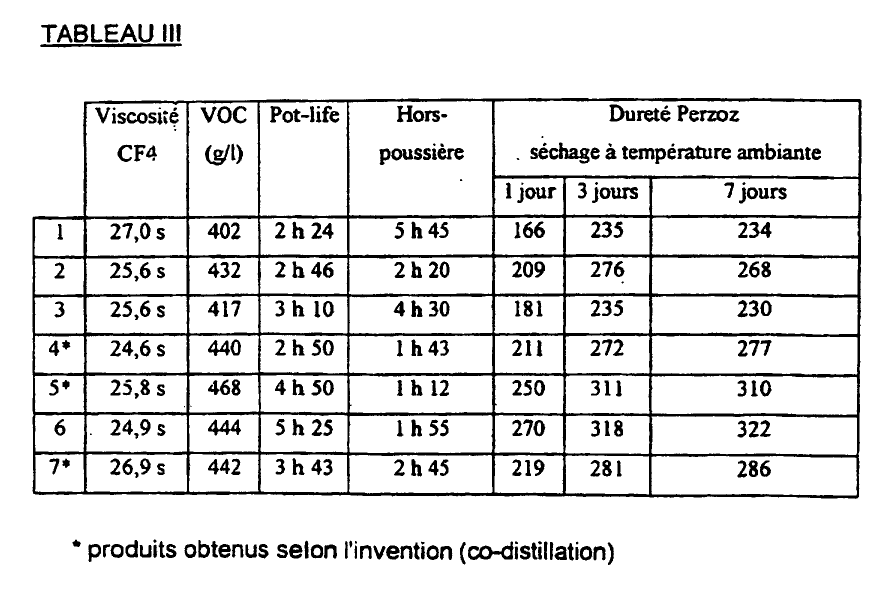

Les compositions obtenues par co-distillation selon l'invention permettent une vitesse de séchage plus rapide que les mélanges physiques présentant les mêmes proportions.

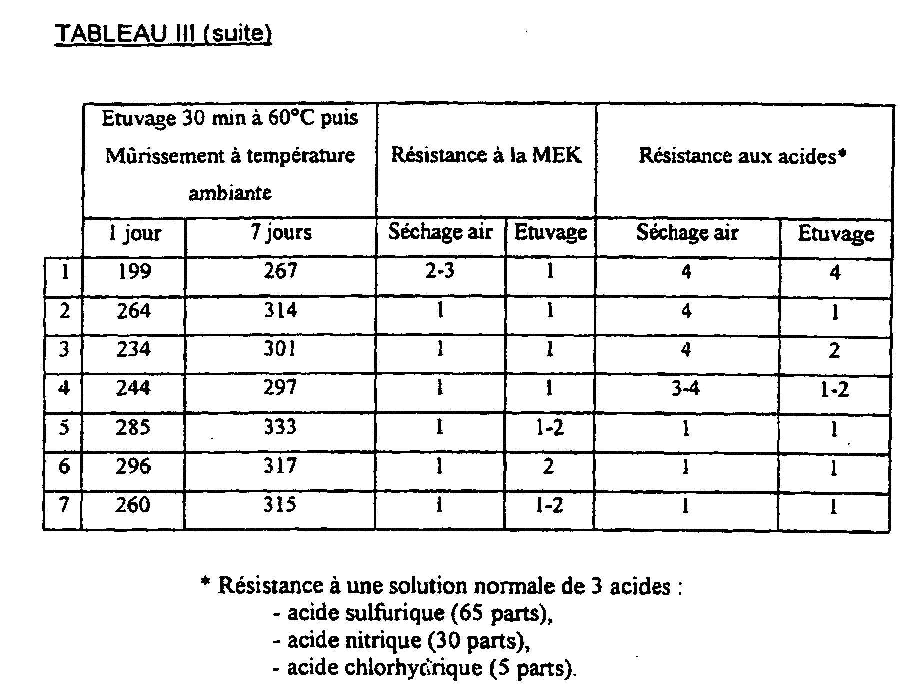

Les compositions obtenues par co-distillation présentent pour un même rapport pondéral une résistance aux solvants meilleure que les compositions obtenues par mélange physique dans les mêmes proportions.

### EXEMPLE 4 :

### Propriétés de peintures obtenues avec des mélanges NBDT/HDT et IPDT/HDT obtenus par co-distillation selon l'invention

Une peinture blanche a été préparée avec la composition suivante en poids :

| | | |
|---|---|---|
| - Polyol | ®Joncryl 912/®Joncryl 922 (25/75) | 49,47 % |
| - Solvant | Acétate de butyle/®Solvesso 100 (60/40) | 11,23 % |
| - Dispersant | ®Disper BYK 160/xylène (50/50) | 1,34 % |
| - Pigment (TiO₂) | ®Rhoditan RL 60 | 37,96 % |

dans laquelle ont été ajoutées les compositions de durcisseurs suivantes :
1. HDT seul (témoin),
2. mélange NBDT/HDT (70/30) co-distillé,
3. mélange NBDT/HDT (70/30) co-distillé + HDT pour obtenir une composition finale NBDT/HDT 50/50,
4. mélange NBDT/HDT (70/30) co-distillé + HDT pour obtenir une composition finale NBDT/HDT 30/70,
5. mélange IPDTIHDT (70/30) co-distillé + HDT pour obtenir une composition finale IPDT/HDT 50/50,
6. mélange physique IPDT + HDT (50/50).

Les proportions des durcisseurs 1 à 6 rapportées à 120 g de pâte alimentaires ainsi que les solvants ajoutés, la viscosité obtenue et la VOC (mesurés à la viscosité d'application 30 secondes à la coupe Ford n° 4) sont rapportés au tableau IV ci-dessous :

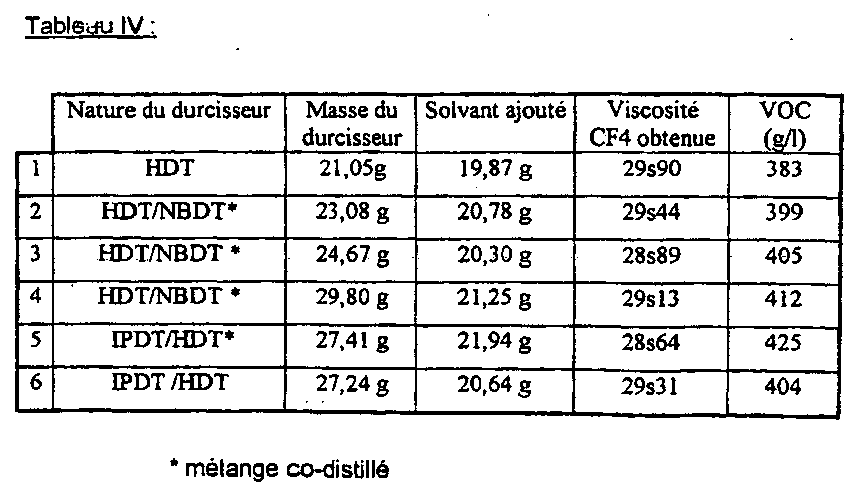

Les tests suivants ont été effectués après sept jours de maturation :
- sur plaque d'acier :
   - mesure de l'épaisseur sèche,
   - dureté Persoz,
   - adhérence quadrillage notée de 1 à 5 (1 = excellent et 5 = mauvais),
   - embouti Erichsen,
   - chocs envers (ASTM et AFNOR),
   - résistance au xylène, à la MEK et aux acides,
- sur plaques d'aluminium :
   - mandrin conique,
- vieillissement accéléré (UVB) sur plaques QUV : perte de brillance et jaunissement.

Les résultats sont rapportés au tableau V ci-dessous :

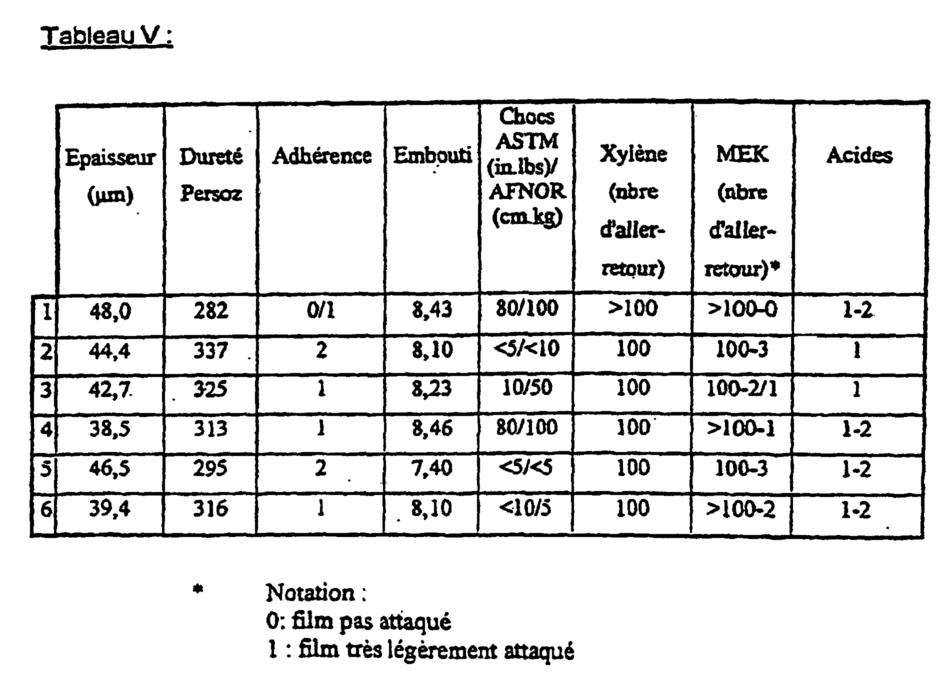

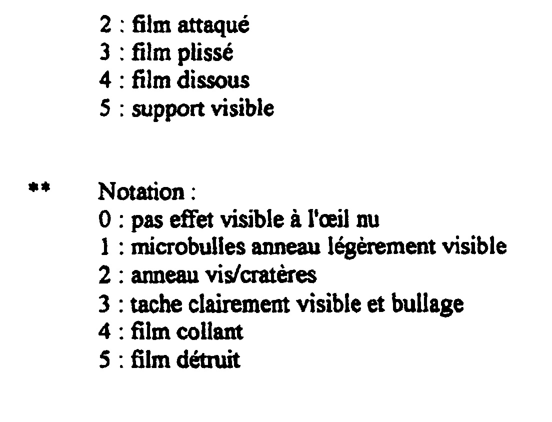

## Revendications

1. Composition pour application simultanée ou successive comprenant :
(1) au moins une composition polyisocyanate comprenant :
- de 51 à 95 % en poids d'un premier polyisocyanate obtenu par (cyclo)trimérisation de diisocyanates monomères cycloaliphatiques, et éventuellement un autre monomère copolymérisable,
- de 5 à 49 % en poids d'un second polyisocyanate obtenu par (cyclo)trimérisation de diisocyanates monomères, et éventuellement un autre monomère copolymérisable,
le rapport des viscosités du second polyisocyanate au premier polyisocyanate étant inférieur à 1/1,5, de préférence inférieur à 1/2, ladite composition étant obtenue par co-distiltation dudit premier polyisocyanate et dudit second polyisocyanate et étant **caractérisée par** la présence de traces de composés mixtes dudit premier polyisocyanate et dudit second polyisocyanate liés par pontage dimère ; et
(2) un polyol de type acrylate répondant aux conditions suivantes pour un extrait sec (ES) compris entre 75 et 80 % en poids :
- Mw (poids moléculaire moyen en poids) non supérieur à 10000, avantageusement non supérieur à 5000, de préférence non supérieur à 2000 ;
- Mn (poids moléculaire moyen en nombre) non supérieur à 5000, avantageusement non supérieur à 3000, de préférence non supérieur à 800 ;
- Mw/Mn (rapport de dispersité) non supérieur à 5, avantageusement non supérieur à 3, de préférence non supérieur à 2 ;
- nombre d'OH/molécule supérieur ou égal à 2, avantageusement supérieur à 2.

2. Composition selon la revendication 1, **caractérisée en ce que** le premier polyisocyanate et/ou le second polyisocyanate, de la composition isocyanate (1), comprend un groupe isocyanurate.

3. Composition selon la revendication 1, **caractérisée en ce que** la composition polyisocyanate (1) comprend :
- de 51 à 95 %, de préférence 55 à 90 %, plus avantageusement de 60 à 85% en poids de polyisocyanate à motif(s) isocyanurate obtenu par cyclotrimérisation du 2,5(6)-diisocyanato-méthyl-bicyclo [2,2,1] heptane, et
- de 5 à 49%, de préférence de 10 à 45 %, plus avantageusement de 15 à 40% en poids de polyisocyanate à motif(s) isocyanurate obtenu par cyclotrimérisation d'hexaméthylène diisocyanate,
les fonctions isocyanates des polyisocyanates étant éventuellement bloquées par un groupe bloquant, ledit groupe bloquant n'étant pas susceptible de se débloquer à la température de distillation de la composition telle que définie ci-dessus.

4. Composition selon la revendication 1 ou la revendication 2,
**caractérisée en ce que** la composition polyisocyanate (1) comprend :
- de 60 à 80 % en poids de polyisocyanate à motif(s) isocyanurate obtenu par cyclotrimérisation du norbomane diisocyanate,
- de 20 à 40 % en poids de polyisocyanate à motif(s) isocyanurate obtenu par cyclotrimérisation d'hexaméthylène diisocyanate,
les fonctions isocyanates des polyisocyanates étant éventuellement bloquées par un groupe bloquant, ledit groupe bloquant n'étant pas susceptible de se débloquer à la température de distillation de la composition telle que définie ci-dessus.

5. Composition selon l'une des revendications 1 à 4 comportant un catalyseur de réticulation, éventuellement latent.

6. Composition selon l'une des revendications 1 à 5, **caractérisée en ce que** la composition polyisocyanate (1) est substantiellement obtenue selon un procédé pour séparer un(des) composé(s) oligomère(s) ou polymère(s) A obtenu(s) par polymérisation ou polycondensation d'isocyanates monomères cycloaliphatiques (A₁) entre eux ou polymérisation ou polycondensation d'isocyanates monomères cycloaliphatiques (A₁) avec un autre composé monomère co-polymérisable (A₂), d'avec le(s) monomère(s) non transformé(s), le(s)dit(s) composé(s) A présentant, en présence d'une quantité de monomères (A₁ et éventuellement A₂) non supérieure à 1 % en poids, de préférence non supérieure à 0,5 % en poids après distillation, une viscosité (a), comprenant les étapes suivantes :
i) on abaisse la viscosité du mélange brut de polymérisation ou polycondensation contenant le(s)dit(s) composé(s) A en ajoutant à celui-ci un ou plusieurs composé(s) B, le composé (B) consistant en un composé oligomère ou polymère obtenu par polymérisation d'isocyanates monomères (B₁) ou copolymérisation d'isocyanates monomères (B₁) avec un autre composé polymérisable (B₂), ayant une viscosité (b) telle que b/a est inférieur à 1/1,5, et de préférence inférieur à 1/2, en une quantité inférieure à 50 % en poids du mélange A plus B sans monomères ; et
ii) on co-distille le mélange ainsi obtenu de manière à séparer le(s) composé(s) (A) et (B) d'avec les monomères non transformés.

7. Composition selon la revendication 6, **caractérisée en ce que** le rapport pondéral (B)/(A) est compris entre 5/95 et 45/55.

8. Composition selon la revendication 6, **caractérisée en ce que** le(s)dit(s) composé(s) (A) est un composé oligomère ou polymère choisi parmi les polyisocyanates, obtenus par (cyclo)trimérisation catalytique de diisocyanates cycloaliphatiques, les prépolymères polyuréthanes obtenus par condensation d'isocyanates monomères cycloaliphatiques notamment de diisocyanates cycloaliphatiques avec un polyol à longue chaîne, les polyisocyanates éventuellement polyisocyanates comprenant des groupements carbamate et/ou allophanate, les oligomères et/ou polymères comprenant des groupements biuret et les oligomères et/ou polymères comprenant des groupements uretdione.

9. Composition selon l'une des revendications 6 à 8, **caractérisée en ce que** (A) a, en présence d'une quantité de monomères non supérieure à 1 % en poids, de préférence non supérieure à 0,5 % en poids, une viscosité supérieure à 10⁴ mPa.s à 25°C, ou est un solide à 25°C.

10. Composition selon l'une des revendications 6 à 9, **caractérisée en ce que** (A) représente l'IPDT, le NBDT, le 1,3-BDT, le H₁₂-MDT ou le MPDT.

11. Composition selon l'une des revendications 6 à 10, **caractérisée en ce que** (B) est un polyisocyanate, éventuellement à motif isocyanurate obtenu par cyclotrimérisation catalytique d'isocyanates monomères ou d'un mélange d'isocyanate(s) monomères, comprenant éventuellement des groupes carbamate, biuret, uretdione et/ou allophanate.

12. Composition selon l'une des revendications 6 à 11, **caractérisée en ce que** (B) comprend un polyisocyanate isocyanurate obtenu par cyclotrimérisation catalytique d'isocyanates aliphatiques et/ou un dimère à motif uretdione obtenu par dimérisation desdits isocyanates et/ou un composé comprenant un groupe biuret obtenu par trimérisation desdits isocyanates avec un autre monomère.

13. Composition selon l'une des revendications 6 à 12, **caractérisée en ce que** B₁ est un isocyanate, de préférence un diisocyanate dans lequel au moins un des atomes de carbone, de préférence les deux, et le cas échéant, les trois atomes de carbone porteurs d'une fonction isocyanate ne sont pas des atomes de carbone secondaires, tertiaires ou néopentyliques.

14. Composition selon l'une des revendications 6 à 13, **caractérisée en ce que** la chaîne hydrocarbonée de B₁ est linéaire et comprend de préférence un enchaînement -(CH₂)ₙ-, n étant compris entre 2 et 10.

15. Composition selon l'une des revendications 6 à 14, **caractérisée en ce que** (B) a, en présence d'une quantité de monomères non supérieure à 1 % en poids, de préférence non supérieure à 0,5 % en poids, une viscosité inférieure à 5.10³ mPa.s à 25°C.

16. Composition selon l'une des revendications 6 à 15, **caractérisée en ce que** (B) est l'hexaméthylène diisocyanate trimère.

17. Composition selon l'une des revendications 6 à 16, **caractérisée en ce que** le composé (B) est ajouté au mélange brut résultant de la réaction de polymérisation de(des) (l')isocyanate(s) monomère(s) de départ (A₁) et éventuellement (A₂) directement dans le réacteur de polymérisation ou par mélange en ligne avant l'admission du mélange résultant dans le train de distillation.

18. Utilisation d'une composition selon l'une quelconque des revendications précédentes, comme revêtement polyuréthanne, peinture ou vernis.

## Patentansprüche

1. Zusammensetzung für eine gleichzeitig oder nacheinander stattfindende Applikation, die
(1) mindestens eine Polyisocyanatzusammensetzung, die
- 51 bis 95 Gew.% eines ersten Polyisocyanats, das durch (Cyclo-)Trimerisation von cycloaliphatischen Diisocyanatmonomeren mit gegebenenfalls einem weiteren copolymerisierbaren Monomeren erhalten ist, und
- 5 bis 49 Gew.% eines zweiten Polyisocyanats, das durch (Cyclo-)Trimerisation von Diisocyanatmonomeren mit gegebenenfalls einem weiteren copolymerisierbaren Monomeren erhalten ist, umfasst,
wobei das Viskositätsverhältnis von zweitem zu erstem Polyisocyanat kleiner als 1/1,5 und vorzugsweise kleiner als 1/2 und diese Zusammensetzung durch Codestillation von erstem und zweitem Polyisocyanat erhalten ist und **dadurch gekennzeichnet ist, dass** Spuren von Mischverbindungen aus erstem und zweitem Polyisocyanat, die durch Dimerbrücken verknüpft sind, vorhanden sind, und
(2) ein Polyol vom Typ Acrylat umfasst, das bei einer Trockensubstanz (TS) von 75 bis 80 Gew.% folgende Bedingungen erfüllt:
- M_{w} (Gewichtsmittel des Molekulargewichts) nicht größer als 10 000, vorteilhafterweise nicht größer als 5 000, und vorzugsweise nicht größer als 2 000,
- Mₙ (Zahlenmittel des Molekulargewichts) nicht größer als 5 000, vorteilhafterweise nicht größer als 3 000, und vorzugsweise nicht größer als 800,
- M_{w}/Mₙ (Polymolekularitätsindex) nicht größer als 5, vorteilhafterweise nicht größer als 3, und vorzugsweise nicht größer als 2 und
- Anzahl OH/Molekül größer oder gleich 2 und vorteilhafterweise größer als 2.

2. Zusammensetzung nach Anspruch 1, **dadurch gekennzeichnet, dass** das erste und/oder zweite Polyisocyanat der Isocyanatzusammensetzung (1) eine Isocyanuratgruppe enthält.

3. Zusammensetzung nach Anspruch 1, **dadurch gekennzeichnet, dass** die Polyisocyanatzusammensetzung (1)
- 51 bis 95 Gew.%, vorzugsweise 55 bis 90 Gew.%, und vorteilhafterweise 60 bis 85 Gew.% Polyisocyanat mit Isocyanurat-Grundeinheit(en), das durch Cyclotrimerisation von 2,5(6)-Diisocyanato-methylbicyclo[2,2,1]heptan erhalten ist, und
- 5 bis 49 Gew.%, vorzugsweise 10 bis 45 Gew.%, und vorteilhafterweise 15 bis 40 Gew.% Polyisocyanat mit Isocyanurat-Grundeinheit(en), das durch Cyclotrimerisation von Hexamethylendiisocyanat erhalten ist,
umfasst, wobei die Isocyanatfunktionen der Polyisocyanate gegebenenfalls durch eine Schutzgruppe blockiert sind, die sich bei der Destillationstemperatur der wie zuvor definierten Zusammensetzung nicht abspalten läßt.

4. Zusammensetzung nach Anspruch 1 oder 2, **dadurch gekennzeichnet, dass** die Polyisocyanatzusammensetzung (1)
- 60 bis 80 Gew.% Polyisocyanat mit Isocyanurat-Grundeinheit(en), das durch Cyclotrimerisation von Norbornandiisocyanat erhalten ist, und
- 20 bis 40 Gew.% Polyisocyanat mit Isocyanurat-Grundeinheit(en), das durch Cyclotrimerisation von Hexamethylendiisocyanat erhalten ist,
umfasst, wobei die Isocyanatfunktionen der Polyisocyanate gegebenenfalls durch eine Schutzgruppe blockiert sind, die sich bei der Destillationstemperatur der wie zuvor definierten Zusammensetzung nicht abspalten läßt.

5. Zusammensetzung nach einem der Ansprüche 1 bis 4, **dadurch gekennzeichnet, dass** sie einen gegebenenfalls latenten Vernetzungsinitiator enthält.

6. Zusammensetzung nach einem der Ansprüche 1 bis 5, **dadurch gekennzeichnet, dass** die Polyisocyanatzusammensetzung (1) im Wesentlichen gemäß einem Verfahren zum Abtrennen einer (mehrerer) oligomerer bzw. polymerer Verbindung(en) A, die durch Polymerisation bzw. Polykondensation von cycloaliphatischen Isocyanat-Monomeren (A₁) untereinander oder Polymerisation bzw. Polykondensation von cycloaliphatischen Isocyanat-Monomeren (A₁) mit einer weiteren copolymerisierbaren monomeren Verbindung (A₂) erhalten worden ist (sind), von dem (den) nicht umgesetzten Monomeren erhalten ist, wobei die Verbindung(en) A bei Vorhandensein eines Anteils an Monomeren (A₁ und gegebenenfalls A₂) von nicht über 1 Gew.% und vorzugsweise nicht über 0,5 Gew.% nach Destillation eine Viskosität (a) besitzt (besitzen), das die Stufen
I) Senken der Viskosität des rohen Polmerisationsoder Polykondensationsgemischs, das die Verbindung(en) A enthält, indem eine oder mehrere Verbindungen B zugegeben werden, wobei die Verbindung B aus einer oligomeren oder polymeren Verbindung besteht, die durch Polymerisation von Isocyanat-Monomeren (B₁) oder Copolymerisation von Isocyanat-Monomeren (B₁) mit einer weiteren polymerisierbaren Verbindung (B₂) erhalten worden ist, und eine Viskosität (b) derart besitzt, dass bei einem Anteil von unter 50 Gew.% des Gemischs aus A plus B ohne Monomeren b/a kleiner als 1/1,5 und vorzugsweise kleiner als 1/2 ist, und
II) Codestillieren des so erhaltenen Gemischs derart, dass die Verbindung(en) (A) und (B) von den nicht umgesetzten Monomeren abgetrennt werden, umfasst.

7. Zusammensetzung nach Anspruch 6, **dadurch gekennzeichnet, dass** das Gewichtsverhältnis von (B)/(A) 5/95 bis 45/55 beträgt.

8. Zusammensetzung nach Anspruch 6, **dadurch gekennzeichnet, dass** die Verbindung(en) (A) eine oligomere oder polymere Verbindung ist (sind), die aus Polyisocyanaten, die durch katalytische (Cyclo-)Trimerisation von cycloaliphatischen Diisocyanaten erhalten sind, Polyurethan-Prepolymeren, die durch Kondensation von cycloaliphatischen Isocyanat-Monomeren, insbesondere cycloaliphatischen Diisocyanaten, mit einem langkettigen Polyol erhalten sind, Polyisocyanaten, gegebenenfalls Polyisocyanaten, die Carbamatund/oder Allophanat-Gruppen enthalten, Oligomeren und/oder Polymeren, die Biuret-Gruppen enthalten, und Oligomeren und/oder Polymeren, die Uretdion-Gruppen enthalten, ausgewählt ist.

9. Zusammensetzung nach einem der Ansprüche 6 bis 8, **dadurch gekennzeichnet, dass** (A) bei Vorhandensein eines Monomeranteils von nicht größer als 1 Gew.% und vorzugsweise nicht größer als 0,5 Gew.% bei 25°C eine Viskosität von über 10⁴ mPa·s besitzt oder ein Feststoff ist.

10. Zusammensetzung nach einem der Ansprüche 6 bis 9, **dadurch gekennzeichnet, dass** (A) IPDT, NBDT, 1,3-BDT, H₁₂-MDT oder MPDT bedeutet.

11. Zusammensetzung nach einem der Ansprüche 6 bis 10, **dadurch gekennzeichnet, dass** (B) ein Polyisocyanat, gegebenenfalls mit einer Isocyanurat-Grundeinheit, bedeutet, das durch katalytische Cyclotrimerisation von Isocyanatmonomeren oder einem Gemisch aus Isocyanatmonomeren, die gegebenenfalls Carbamat-, Biurat-, Uretdion- und/oder Allophanat-Gruppen enthalten, erhalten worden ist.

12. Zusammensetzung nach einem der Ansprüche 6 bis 11, **dadurch gekennzeichnet, dass** (B) ein Polyisocyanatisocyanurat, das durch katalytische Cyclotrimerisation von aliphatischen Isocyanaten erhalten worden ist, und/oder ein Dimer mit Uretdion-Grundeinheit, das durch Dimerisation der Isocyanate erhalten worden ist, und/oder eine eine Biuret-Gruppe enthaltende Verbindung, die durch Trimerisation der Isocyanate mit einem anderen Monomeren erhalten worden ist, umfasst.

13. Zusammensetzung nach einem der Ansprüche 6 bis 12, **dadurch gekennzeichnet, dass** B₁ ein Isocyanat und vorzugsweise ein Diisocyanat bedeutet, in welchem mindestens eines der Kohlenstoffatome, vorzugsweise die zwei, und gegebenenfalls die drei Kohlenstoffatome, die eine Isocyanatfunktion tragen, keine sekundären, tertiären oder Neopentylkohlenstoffatome sind.

14. Zusammensetzung nach einem der Ansprüche 6 bis 13, **dadurch gekennzeichnet, dass** die Kohlenwasserstoffkette von B₁ geradkettig ist und vorzugsweise eine Hauptkette -(CH₂)ₙ, wobei n 2 bis 10 bedeutet, enthält.

15. Zusammensetzung nach einem der Ansprüche 6 bis 14, **dadurch gekennzeichnet, dass** (B) in Gegenwart eines Anteils an Monomeren von nicht über 1 Gew.% und vorzugsweise von nicht über 0,5 Gew.% bei 25°C eine Viskosität von unter 5·10³ mPa·s besitzt.

16. Zusammensetzung nach einem der Ansprüche 6 bis 15, **dadurch gekennzeichnet, dass** (B) das trimere Hexamethylendiisocyanat bedeutet.

17. Zusammensetzung nach einem der Ansprüche 6 bis 16, **dadurch gekennzeichnet, dass** die Verbindung (B) dem Rohgemisch, das aus der polymerisierenden Umsetzung von Ausgangs-Isocyanatmonomer(en) (A₁) und gegebenenfalls (A₂) resultiert, direkt in dem Polymerisationsreaktor oder durch Vermischen in der Anlage vor dem Einleiten des resultierenden Gemischs in die Destillationskolonne zugegeben wird.

18. Verwendung einer Zusammensetzung nach einem der vorhergehenden Ansprüche für eine Beschichtung aus einem Polyurethananstrichstoff oder -lack.

## Claims

1. Composition for simultaneous or successive application, comprising:
(1) at least one polyisocyanate composition comprising:
- from 51 to 95% by weight of a first polyisocyanate obtained by (cyclo)trimerization of cycloaliphatic diisocyanate monomers, and optionally another copolymerizable monomer,
- from 5 to 49% by weight of a second polyisocyanate obtained by (cyclo)trimerization of diisocyanate monomers, and optionally another copolymerizable monomer,
the ratio of the viscosities of the second polyisocyanate to the first polyisocyanate being less than 1/1.5, preferably less than 1/2, the said composition being obtained by co-distillation of the said first polyisocyanate and of the said second polyisocyanate and being **characterized by** the presence of traces of mixed compounds of the said first polyisocyanate and of the said second polyisocyanate linked by dimeric bridging; and
(2) a polyol of acrylate type which satisfies the following conditions for a solids content (SC) of between 75 and 80% by weight:
- Mw (weight-average molecular weight) not greater than 10,000, advantageously not greater than 5000, preferably not greater than 2000;
- Mn (number-average molecular weight) not greater than 5000, advantageously not greater than 3000, preferably not greater than 800;
- Mw/Mn (dispersity ratio) not greater than 5, advantageously not greater than 3, preferably not greater than 2;
- number of OH/molecule greater than or equal to 2, advantageously greater than 2.

2. Composition according to Claim 1, **characterized in that** the first polyisocyanate and/or the second polyisocyanate of the isocyanate composition (1) comprises an isocyanurate group.

3. Composition according to Claim 1, **characterized in that** the polyisocyanate composition (1) comprises:
- from 51 to 95%, preferably 55 to 90%, more advantageously from 60 to 85%, by weight of polyisocyanate containing isocyanurate unit(s) obtained by cyclotrimerization of 2,5(6)-diisocyanatomethylbicyclo-[2.2.1]heptane, and
- from 5 to 49%, preferably from 10 to 45%, more advantageously from 15 to 40%, by weight of polyisocyanate containing isocyanurate unit(s) obtained by cyclotrimerization of hexamethylene diisocyanate,
the isocyanate functions in the polyisocyanates optionally being blocked with a blocking group, the said blocking group not being capable of being deblocked at the distillation temperature of the composition as defined above.

4. Composition according to Claim 1 or Claim 2, **characterized in that** the polyisocyanate composition (1) comprises:
- from 60 to 80% by weight of polyisocyanate containing isocyanurate unit(s) obtained by cyclotrimerization of norbornane diisocyanate,
- from 20 to 40% by weight of polyisocyanate containing isocyanurate unit(s) obtained by cyclotrimerization of hexamethylene diisocyanate,
the isocyanate functions in the polyisocyanates optionally being blocked with a blocking group, the said blocking group not being capable of being deblocked at the distillation temperature of the composition as defined above.

5. Composition according to one of Claims 1 to 4, comprising a crosslinking catalyst, which may be a latent catalyst.

6. Composition according to one of Claims 1 to 5, **characterized in that** the polyisocyanate composition (1) is substantially obtained according to a process for separating one (or more) oligomeric or polymeric compound(s) A obtained by polymerization or polycondensation of cycloaliphatic isocyanate monomers (A₁) with each other or polymerization or polycondensation of cycloaliphatic isocyanate monomers (A₁) with another copolymerizable monomer compound (A₂), from the unconverted monomer(s), the said compound(s) A having, in the presence of an amount of monomers (A₁ and optionally A₂) of not more than 1% by weight, preferably not more than 0.5% by weight after distillation, a viscosity (a), this process comprising the following steps:
i) the viscosity of the crude polymerization or polycondensation mixture containing the said compound(s) A is lowered by adding thereto one or more compound(s) B, the compound (B) consisting of an oligomeric or polymeric compound obtained by polymerization of isocyanate monomers (B₁) or copolymerization of isocyanate monomers (B₁) with another polymerizable compound (B₂), of viscosity (b) such that b/a is less than 1/1.5, and preferably less than 1/2, in an amount of less than 50% by weight of the mixture A plus B without monomers; and
ii) the mixture thus obtained is co-distilled so as to separate the compound(s) (A) and (B) from the unconverted monomers.

7. Composition according to Claim 6, **characterized in that** the weight ratio (B)/(A) is between 5/95 and 45/55.

8. Composition according to Claim 6, **characterized in that** the said compound(s) (A) is an oligomeric or polymeric compound chosen from polyisocyanates, obtained by catalytic (cyclo)trimerization of cycloaliphatic diisocyanates, polyurethane prepolymers obtained by condensation of cycloaliphatic isocyanate monomers, in particular cycloaliphatic diisocyanate monomers, with a long-chain polyol, polyisocyanates, optionally polyisocyanates comprising carbamate and/or allophanate groups, oligomers and/or polymers comprising biuret groups and oligomers and/or polymers comprising uretdione groups.

9. Composition according to one of Claims 6 to 8, **characterized in that** (A) has, in the presence of an amount of monomers of not greater than 1% by weight, preferably not greater than 0.5% by weight, a viscosity of greater than 10⁴ mPa.s at 25°C, or is solid at 25°C.

10. Composition according to one of Claims 6 to 9, **characterized in that** (A) represents IPDT, NBDT, 1,3-BDT, H₁₂-MDT or MPDT.

11. Composition according to one of Claims 6 to 10, **characterized in that** (B) is a polyisocyanate, optionally containing an isocyanurate unit, obtained by catalytic cyclotrimerization of isocyanate monomers or of a mixture of isocyanate monomers, optionally comprising carbamate, biuret, uretdione and/or allophanate groups.

12. Composition according to one of Claims 6 to 11, **characterized in that** (B) comprises an isocyanurate polyisocyanate obtained by catalytic cyclotrimerization of aliphatic isocyanates and/or a dimer containing a uretdione unit obtained by dimerization of the said isocyanates and/or a compound comprising a biuret group obtained by trimerization of the said isocyanates with another monomer.

13. Composition according to one of Claims 6 to 12, **characterized in that** B₁ is an isocyanate, preferably a diisocyanate in which at least one of the carbon atoms, preferably both of them, and, where appropriate, the three carbon atoms bearing an isocyanate function are not secondary, tertiary or neopentyl carbon atoms.

14. Composition according to one of Claims 6 to 13, **characterized in that** the hydrocarbon-based chain of B₁ is linear and preferably comprises a sequence -(CH₂)ₙ-, n being between 2 and 10.

15. Composition according to one of Claims 6 to 14, **characterized in that** (B) has, in the presence of an amount of monomers of not greater than 1% by weight, preferably not greater than 0.5% by weight, a viscosity of less than 5 x 10³ mPa.s at 25°C.

16. Composition according to one of Claims 6 to 15, **characterized in that** (B) is hexamethylene diisocyanate trimer.

17. Composition according to one of Claims 6 to 16, **characterized in that** compound (B) is added to the crude mixture resulting from the polymerization reaction of the starting isocyanate monomer(s) (A₁) and optionally (A₂) directly in the polymerization reactor or by in-line mixing before admission of the resulting mixture into the distillation train.

18. Use of a composition according to any one of the preceding claims, as a polyurethane coating, paint or varnish.
